# EUROPÄISCHE PATENTSCHRIFT

(11) **EP 3 620 479 B1**
(45) Veröffentlichungstag und Bekanntmachung des Hinweises auf die Patenterteilung: **14.12.2022**
(21) Anmeldenummer: 19174361.6
(22) Anmeldetag: 14.05.2019
(51) Int. Cl.: C08G 18/71, C08G 18/10, C08G 18/16, C08G 18/18, C08G 18/32, C08G 18/62, C08G 18/75, C08G 18/79, C09D 175/04, C08G 18/30

(54) **ZINNFREIE KATALYSE VON SILAN-FUNKTIONALEN POLYURETHAN VERNETZERN**
TIN-FREE CATALYSIS OF SILANE-FUNCTIONAL POLYURETHANE CROSSLINKING AGENTS
CATALYSE SANS ÉTAIN DES AGENTS DE RÉTICULATION DE POLYURÉTHANES SILANE FONCTIONNELS

(30) Priorität: 10.09.2018 EP 18193333
(43) Veröffentlichungstag der Anmeldung: 11.03.2020
(73) Patentinhaber: Evonik Operations GmbH, 45128 Essen (DE)
(72) Erfinder: UNKELHÄUSSER, Tobias, 59348 Lüdinghausen (DE); SPYROU, Emmanouil, 46514 Schermbeck (DE); HÖSL, Stephanie, 46286 Dorsten (DE); MENNE, Dennis, 45721 Haltern am See (DE); STREUKENS, Guido, 42111 Wuppertal (DE)
(74) Vertreter: Evonik Patent Association

(56) Entgegenhaltungen:
- EP-A1- 3 067 375
- EP-A1- 3 085 718
- DE-A1-102007 020 404
- DE-A1-102013 208 356
- US-A1- 2015 166 719

## Beschreibung

Die vorliegende Erfindung betrifft eine aminosilanfreie Zusammensetzung mindestens enthaltend A) ein Addukt aus Isocyanatosilanen an Hydroxy-funktionelle Verbindungen und B) einen zinnfreien Katalysator, sowie ein aminosilanfreies Beschichtungsmittel, welches mindestens die Zusammensetzung enthält, und die Verwendung der Beschichtungsmittel.

Zur dauerhaft schützenden Beschichtung von Substraten werden heute in der Regel 2-komponetige Lacke auf Polyurethanbasis eingesetzt, die langsam bei Umgebungstemperatur sowie zügig bei erhöhten Temperaturen aushärten können. Sie bestehen typischerweise aus Lackharzen und Vernetzern, die jeweils mit funktionellen Gruppen ausgestattet sind und unter Vernetzung miteinander reagieren. Aufgrund der starken Abhängigkeit von Temperatur und Vernetzungsgeschwindigkeit und dem daraus resultierenden Zwang der Benutzung von aktiven, toxikologisch bedenklichen Katalysatoren sowie funktionellen Gruppen besteht der Wunsch, alternative Beschichtungssysteme bereit zu stellen. Hierbei soll eine hohe Reaktivität unter verschiedenen Härtungsbedingungen sowie eine hohe Beständigkeit der ausgehärteten Beschichtungen gegen Chemikalien oder Witterungseinflüsse, aber auch gegen mechanische Beanspruchung gewährleistet werden. Als technische Referenz sind die seit langem bekannten aliphatischen 2K- Polyurethansysteme (PUR) heranzuziehen.

Ein solches 2K-System beschreibt beispielsweise die DE 10 2007 013 262 A1. Es handelt sich hierbei aber um 2K-Systeme, die erst bei erhöhten Temperaturen ab 140°C zügig ausgehärtet werden können.

Die WO 2014/180623 A1 beschreibt ein silanhaltiges Beschichtungsmittel welches ausschließlich bei Temperaturen im Bereich von 0°C bis 40°C ausgehärtet werden kann und aufgrund des verwendeten Aminosilans keine Kompatibilität zu 2K-Polyurethansystemen aufweist. Weiter ist es nicht möglich lackübliche schnelltrocknende Lösemittel wie bspw. Acetate, insbesondere Butylacetat in Kombination mit dem Aminosilan-haltigen Beschichtungsmittel zusammen als 1K System zu lagern, da durch eine auftretende Aminolyse die Reaktivität des Systems inhibiert wird.

Zudem können mit den dort offenbarten Beschichtungsmitteln nur durch die vorhandenen Methanol-freisetzenden, kurzkettigen Alkoxygruppen zügige Vernetzungsgeschwindigkeiten gewährleistet werden.

EP 3 085 718 A1 offenbart Zusammensetzungen für die Herstellung von Polyisocyanuratkunststoffen, die Addukte aus IPMS und 1,9-Nonandiol enthalten können. Es wird jedoch nicht offenbart, dass die Menge des Adduktes zwischen 40 und 99 Gew.-% bezogen auf die gesamte Zusammensetzung betragen kann.

DE 10 2007 020 404 A1 offenbart mit einem Katalysator härtbare Beschichtungsmaterialien enthaltend höhere Silane, die aus Silanen und organischen Molekülen gebildet werden können. In den Beispielen werden entsprechende Addukte aus Hexandiol oder einem F-haltigen Polyetherdiol und einem Isocyanatoalkoxysilan offenbart. Die genannten Addukte werden jedoch in Kombination mit zinnhaltigen Katalysatoren eingesetzt.

EP 3 067 375 A1 betrifft silylierte Polyurethane, die aus dem Produkt mindestens eines Polyols und mindestens eines Triisocyanats und einem Isocyanatosilan gebildet werden können.

US 2015/0166719 A1 offenbart silylfunktionalisierte Polyurethanpolymere, die aus einem Polyol und einem Isocyanatosilan hergestellt werden können. Alkylammoniumhalogenide werden jedoch nicht als Katalysatoren offenbart.

Die aus dem Stand der Technik bekannten Systeme haben den Nachteil, dass diese entweder bei Raumtemperatur oder erhöhten Temperaturen aushärten sowie oft toxikologisch bedenkliche Zinnverbindungen enthalten, um eine ausreichende Vernetzungsgeschwindigkeit zu gewährleisten. Weiter ist bei silanhaltigen Beschichtungsmitteln oftmals die mechanische Flexibilität nicht vorteilhaft und eine Reduzierung der intrinsischen Silan-Sprödigkeit durch beispielsweise 2K-Polyurethansystemen (PUR), aufgrund von Inkompatibilitäten, nicht möglich. Hinzu besteht bei derartigen silanhaltigen Beschichtungsmitteln der Zwang, toxikologisch bedenkliche, Methanol freisetzende Komponenten einzusetzen, um eine ausreichende Vernetzungsgeschwindigkeit zu gewährleisten.

Aufgabe der vorliegenden Erfindung ist die Bereitstellung einer Zusammensetzung, welche vorzugsweise bei Temperaturen im Bereich von 0 °C bis 170 °C ausgehärtet werden kann, kompatibel zu 2K- Polyurethansystemen und zinnfrei ist. Die genannte Aufgabe wird durch die erfindungsgemäßen aminosilanfreien Zusammensetzungen bzw. die erfindungsgemäßen aminosilanfreien Beschichtungsmittel der vorliegenden Erfindung gelöst.

Die zugrundeliegende Aufgabe der vorliegenden Erfindung konnte durch eine aminosilanfreie Zusammensetzung, welche mindestens A) ein Addukt aus Isocyanatosilanen an Hydroxy-funktionelle Verbindungen und B) einen zinnfreien Katalysator enthält, gelöst werden. In einer bevorzugten Ausführungsform besteht die aminosilanfreie Zusammensetzung ausschließlich aus A) einem Addukt aus Isocyanatosilanen an Hydroxy-funktionelle Verbindungen und B) einem zinnfreien Katalysator.

Die erfindungsgemäßen aminosilanfreien Zusammensetzungen können insbesondere als

Beschichtungsmittel verwendet werden. Es hat sich überraschend gezeigt, dass die erfindungsgemäßen Zusammensetzungen, welche mindestens die vorgenannten Komponenten A) und B) enthalten, bereits bei 0°C zu stabilen Beschichtungen führen, wenn sie als Beschichtungsmittel eingesetzt werden. Bei diesen erfindungsgemäßen Beschichtungsmitteln handelt es sich um einkomponentige Systeme (1K), die einfach zu applizieren sind. Aufgrund der niedermolekularen Anteile der aminosilanfreien Zusammensetzung bzw. aminosilanfreien Beschichtungsmittel sind diese im Hinblick auf eine spätere Anwendung ohne zusätzliche organische Lösungsmittel formulier- und verarbeitbar. Somit ist es möglich, einen VOC-Gehalt von unter 100 g/I zu realisieren.

Weiter hat sich überraschend gezeigt, dass die erfindungsgemäßen aminosilanfreien Zusammensetzungen, welche die vorgenannten Komponenten A) und B) enthalten, auch Ethoxy-basierte Addukte aus Isocyanatosilanen an Hydroxyfunktionellen Verbindungen zügig bei Raumtemperatur härten können.

Bei der Komponente A) der erfindungsgemäßen aminosilanfreien Zusammensetzung bzw. des Beschichtungsmittels handelt es sich um Addukte aus Isocyanatosilanen an Hydroxy-funktionelle Verbindungen.

Vorzugsweise handelt es sich bei dem Isocyanatosilan um eine Verbindung der Formel (I)

OCN-(Alkyl)-Si(Alkoxy)₃ (I)

worin das Alkyl in vorstehender Formel (I) einer linearen oder verzweigten Alkylgruppe mit 1 bis 4 Kohlenstoffatomen und das Alkoxy in vorstehender Formel (I) gleichzeitig oder unabhängig voneinander einer Methoxy-, Ethoxy-, Propoxy- oder Butoxy-Gruppe, entspricht, wobei die drei Alkoxygruppen in der Verbindung der Formel (I) jeweils gleich oder unterschiedlich voneinander sein können.

Als Verbindungen der Formel (I) OCN-(Alkyl)-Si(Alkoxy)₃ eignen sich grundsätzlich alle der vorab beschriebenen möglichen Verbindungen. Besonders bevorzugt ist Alkoxy aber ausgewählt aus Methoxy- und Ethoxygruppen. Bevorzugt sind die Alkoxygruppen, in dem Fall, dass alle drei Alkoxygruppen gleich sind, jedoch keine Methoxygruppen.

Geeignete Verbindungen der Formel (I) sind insbesondere Isocyanatoalkylalkoxysilane, die ausgewählt sind aus der Gruppe umfassend 3-Isocyanatopropyltrimethoxysilan, 3-Isocyanatopropyltriethoxysilan, 3-Isocyanatopropyltriisopropoxysilan, 2-Isocyanatoethyltrimethoxysilan, 2-Isocyanatoethyltriethoxysilan, 2-Isocyanatoethyltriisopropoxysilan, 4-Isocyanatobutyltrimethoxysilan, 4-Isocyanatobutyltriethoxysilan, 4-Isocyanatobutyltriisopropoxysilane, Isocyanatomethyltrimethoxysilan, Isocyanatomethyltriethoxysilan, Isocyanatomethytriisopropoxysilan, 3-Isocyanatopropyldimethoxyethoxysilan und/oder 3-Isocyanatopropyldiethoxymethoxysilan.

Bevorzugt werden 3-Isocyanatopropyltrimethoxysilan, 3-Isocyanatopropyltriethoxysilan, 3-Isocyanatopropyldimethoxyethoxysilan und/oder 3-Isocyanatopropyldiethoxymethoxysilan, besonders bevorzugt 3-Isocyanatopropyltriethoxysilan, 3-Isocyanatopropyldimethoxyethoxysilan und/oder 3-Isocyanatopropyldiethoxymethoxysilan als Verbindung der Formel (I) (Komponente A)) in den erfindungsgemäßen Zusammensetzungen bzw. Beschichtungsmitteln eingesetzt.

Die vorab genannten Isocyanatosilane liegen gebunden als Addukt an Hydroxy-funktionelle Verbindungen vor. Als entsprechende Hydroxy-funktionelle Verbindungen eignen sich einwertige oder mehrwertige Alkohole sowie Polyole.

Geeignete Hydroxy-funktionelle Verbindungen sind beispielsweise Mono-Alkohole oder Polyole, wobei der Begriff "Polyole" Diole, Triole, Tetrole und Hydroxylgruppen-haltige Polymere umfasst.

In einer bevorzugten Ausführungsform werden als Hydroxy-funktionelle Verbindungen Diole, Triole oder Tetrole, besonders bevorzugt Diole oder Triole, eingesetzt.

Im Falle der Mono-Alkohole handelt es sich insbesondere um monofunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 9 Kohlenstoffatome, insbesondere um Methanol, Ethanol, Propanol und Butanol.

Als Mono-Alkohole können auch Glykolether eingesetzt werden. Als Gykolether sind insbesondere Ethylenglykolmonoethylether, Ethylenglykolmonopropylether, Ethylenglykolmonoisopropylether, Ethylenglykolmonobutylether, Ethylenglykolmonophenylether, Ethylenglykoldimethylether, Diethylenglykolmonomethylether, Diethylenglykolmonoethylether, Diethylenglykolmonobutylether, Diethylenglykoldimethylether, 1,1'-Oxybis(2-Triethylenglykol)monomethylether, Triethylenglykolmonobutylether, Propylenglykol-1-methylether, Propylenglykol-2-methylether, Propylenglykol-1-ethylether und Propylenglykol-1-butylether geeignet.

Als Diole eignen sich insbesondere difunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 10 Kohlenstoffatomen.

Als Triole eignen sich besonders trifunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 10 Kohlenstoffatomen.

Als Tetrole eignen sich besonders tetrafunktionelle verzweigte oder lineare Alkohole oder Mischungen aus diesen mit 1 bis 20 Kohlenstoffatomen, bevorzugt 1 bis 12 Kohlenstoffatomen, besonders bevorzugt 1 bis 10 Kohlenstoffatomen.

Des Weiteren können Hydroxylgruppen-haltige Polymere mit einer OH-Zahl von 10 bis 500 mg KOH/Gramm und einer zahlenmittleren Molmasse von 250 bis 6000 g/Mol als Hydroxy-funktionelle Verbindungen eingesetzt werden, wobei die Hydroxylgruppen-haltige Polymere aus der Gruppe, bestehend aus Polyestern, Polyethern, Polyacrylaten, Polycarbonaten, Epoxidharzen, Cellulosederivaten, FEVE (Fluoroethylene Vinyl Ether), Alkyden und Polyurethanen, wobei die Polyurethane aus Polyolen und Diisocyanat-Monomeren bestehen bzw. gebildet werden, ausgewählt werden. Bevorzugt werden Hydroxylgruppen-haltige Polyester und/oder Polyacrylate mit einer OH-Zahl von 20 bis 150 mg KOH/Gramm und einem zahlenmittleren Molekulargewicht von 500 bis 6000 g/mol eingesetzt.

Die Hydroxylzahl (OHZ) wird bestimmt nach DIN EN ISO 4629-2 (2016-12). Bei diesem Verfahren wird die Probe mit Essigsäureanhydrid in N-Methyl-2-pyrrolidon (NMP) in Gegenwart von 4-N-Dimethylaminopyridin in NMP als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die zahlenmittleren Molekulargewichte werden nach DIN 55672-1 (2016-03) mittels Gelpermeationschromatographie in Tetrahydrofuran als Eluent und Polystyrol zur Kalibrierung bestimmt.

Darüber hinaus können auch Mischungen der oben genannten Hydroxyl-funktionellen Verbindungen eingesetzt werden.

In einer bevorzugten Ausführungsform werden als Hydroxy-funktionelle Verbindungen für das Addukt A) Diole, Triole oder Tetrole, besonders bevorzugt Diole oder Triole, eingesetzt.

Die Herstellung der Addukte A) kann lösemittelfrei oder unter Verwendung von nichtprotischen Lösemitteln durchgeführt werden, wobei die Umsetzung diskontinuierlich oder kontinuierlich erfolgen kann. Die Reaktion kann bei Raumtemperatur, das heißt bei Temperaturen im Bereich von 20 bis 25 °C, durchgeführt werden, bevorzugt werden jedoch höhere Temperaturen im Bereich 30 bis 150 °C, insbesondere im Bereich von 50 bis 100 °C verwendet. Zur Beschleunigung der Reaktion können vorteilhaft in der Urethanchemie bekannte Katalysatoren wie Sn-, Bi-, Zn- und andere Metallcarboxylate, tert.-Amine wie beispielsweise 1,4-Diazabicyclo[2.2.2]octan (DABCO), Triethylamin etc. eingesetzt werden. Die Reaktion wird bevorzugt unter Ausschluss von Wasser durchgeführt.

Die Umsetzung der Isocyanatosilane und der Hydroxy-funktionellen Verbindungen zur Bildung der Addukte A) erfolgt dabei insbesondere derart, dass das Verhältnis von OH-Gruppen aus den Hydroxy-funktionellen Verbindungen zu NCO-Gruppen aus den Isocyanatosilanen im Addukt A) von 0,8 : 1 bis 1,2 : 1, bevorzugt 0,9 : 1 bis 1,1 : 1, beträgt, wobei die stöchiometrische Umsetzung (1 : 1) ganz besonders bevorzugt ist. In einer ganz besonders bevorzugten Ausführungsform wird eine vollständige Umsetzung aller OH-Gruppen der Hydroxy-funktionellen Verbindungen mit NCO-Gruppen der Isocyanatosilane, insbesondere jene der Verbindungen der Formel (I), erreicht.

In Abhängigkeit der gewählten Stöchiometrie beider Reaktionspartner kann das erhaltene Addukt A) noch freie Hydroxyl- oder Isocyanatgruppen enthalten. Die Addukte A) sind vorzugsweise jedoch frei von NCO-Gruppen. In diesem Zusammenhang ist die Formulierung "frei von NCO-Gruppen" so zu verstehen, dass die erfindungsgemäße Zusammensetzung bzw. das erfindungsgemäße Beschichtungsmittel ≤ 0,5 % freie NCO-Gruppen, bevorzugt ≤ 0,05 % freie NCO-Gruppen, weiterhin bevorzugt ≤ 0,01% freie NCO-Gruppen und besonders bevorzugt keine freien NCO-Gruppen enthält. Die Prozentangabe bezieht sich auf die Gesamtmenge an NCO-Gruppen des eingesetzten Isocyanatosilans.

Bei der genannten Umsetzung reagieren die NCO-Gruppen der Isocyanatosilane mit den OH-Gruppen der Hydroxy-funktionellen Verbindungen unter Ausbildung von NH-CO-O-Gruppen, die die genannten Verbindungen miteinander verknüpfen .Die dadurch erhaltenen Addukte A) sind insbesondere bei Temperaturen bei und oberhalb von 0 °C flüssig, auch in lösemittelfreier Form. Es handelt sich also vorzugsweise um nicht kristallisierende, eher niedermolekulare Verbindungen.

Die Addukte A) sind in lösemittelfreier Form niedrig- bis hochviskos, d.h. sie weisen eine Viskosität im Bereich von 10 bis 40000 mPa·s, vorzugsweise im Bereich von 50 bis 18000 mPa·s (DIN EN/ISO 3219 (1994-10) bei 23 °C) auf. Zwecks besserer Handhabbarkeit können die Produkte zusätzlich mit Lösemitteln, die wie Alkohole auch protisch sein können, versetzt sein. Die Festkörpergehalte derartiger Zubereitungen betragen vorzugsweise > 80 Gew.-% und weisen dabei bevorzugt eine maximale Viskosität von 1000 mPas (DIN EN/ISO 3219 (1994-10) bei 23 °C) auf.

Die Menge an Komponente A) in der erfindungsgemäßen aminosilanfreien Zusammensetzung bzw. in dem erfindungsgemäßen aminosilanfreien Beschichtungsmittel beträgt 40 bis 99 Gew.-% bezogen auf die gesamte Zusammensetzung bzw. das gesamte Beschichtungsmittel.

Bei der Komponente B) der erfindungsgemäßen aminosilanfreien Zusammensetzung bzw. des erfindungsgemäßen aminosilanfreien Beschichtungsmittels handelt es sich um einen zinnfreien Katalysator ausgewählt aus Tetramethylammoniumfluorid (TMAF), Tetraethylammoniumfluorid (TEAF), Tetrapropylammoniumfluorid (TPAF) und Tetrabutylammoniumfluorid (TBAF) oder einer Mischung davon. Damit ist die erfindungsgemäße aminosilanfreie Zusammensetzung bzw. das erfindungsgemäße aminosilanfreie Beschichtungsmittel vorzugsweise insgesamt zusätzlich zinnfrei. Zinnfrei im Sinne der vorliegenden Erfindung ist so zu verstehen, dass der erfindungsgemäßen aminosilanfreien Zusammensetzung bzw. dem erfindungsgemäßen aminosilanfreien Beschichtungsmittel keine Zinnverbindung (beispielsweise als Katalysator) zugesetzt wird, Zinnverbindungen aber in Kleinstmengen als Verunreinigung aus dem vorherigen Herstellverfahren der Komponenten in das Beschichtungsmittel eingetragen werden können.

Bevorzugt werden die genannten Alkylammoniumfluoride in Form ihrer Hydrate, beispielsweise dem Trihydrat, eingesetzt. Die Alkylammoniumhalogenide können insbesondere als Lösung in einem C1 bis C6-Alkohol, insbesondere Methanol, Ethanol, Propanol, Butanol, Pentanol oder Hexanol zur Zusammensetzung hinzugefügt werden.

Die Menge des zinnfreien Katalysators B) in der erfindungsgemäßen aminosilanfreien Zusammensetzung bzw. in dem erfindungsgemäßen aminosilanfreien Beschichtungsmittel beträgt 0,01 bis 3,0 Gew.-%, vorzugsweise 0,1 bis 1 Gew.-%, jeweils bezogen auf die gesamte Zusammensetzung bzw. das gesamte Beschichtungsmittel.

Die vorliegende Erfindung betrifft aminosilanfreie Zusammensetzungen bzw. aminosilanfreie Beschichtungsmittel. Aminosilanfrei im Sinne der vorliegenden Erfindung ist so zu verstehen, dass der Zusammensetzung bzw. dem Beschichtungsmittel kein Aminosilan hinzugefügt wird und diese Zusammensetzungen oder Beschichtungsmittel kein Aminosilan enthalten. Kleinstmengen (< 0,01 Gew.%) an Aminosilanen, die beispielsweise aus Verunreinigungen der Komponenten eingetragen sind, können toleriert werden.

Dadurch kann erreicht werden, dass die erfindungsgemäßen Zusammensetzungen bzw. Beschichtungsmittel mit Polyisocyanaten bzw. 2K- Polyurethansystemen kombiniert werden können, da keine Reaktion zwischen Polyisocyanat und Aminosilan stattfinden kann. Weiterhin ist die erfindungsgemäße Zusammensetzung bzw. das erfindungsgemäße Beschichtungsmittel ohne Aminosilan gegenüber Einbrand stabil. Monomere Aminosilane sieden schon bei vergleichsweise niedrigen Temperaturen und stehen dann nicht mehr für eine Aktivierung des Beschichtungssystems ausreichend zur Verfügung. Durch Aminosilane in den Zusammensetzungen oder Beschichtungsmittel kann auch Methanol freigesetzt werden, was für bestimmte Anwendungen aus toxikologischer Sicht unerwünscht sein kann, beispielsweise für freiverkäufliche Produkte aus dem Baumarkt.

Die erfindungsgemäße aminosilanfreie Zusammensetzung kann wie erwähnt aus den Komponenten A) und B) bestehen, frei von Bindemitteln sein und als Beschichtungsmittel eingesetzt werden. Das aminosilanfreie Beschichtungsmittel ist dann ein einkomponentiges (1K-)Beschichtungsmittel, bestehend aus der erfindungsgemäßen Zusammensetzung.

Gegenstand der Erfindung ist demnach ein aminosilanfreies 1K-Beschichtungsmittel, welches mindestens die erfindungsgemäße Zusammensetzung (mindestens enthaltend die oder bestehend aus den Komponenten A) und B)) jedoch kein Bindemittel umfasst. In einer bevorzugten Ausführungsform enthält das aminosilanfreie 1K-Beschichtungsmittel zusätzlich mindestens einen Hilfs- und/oder Zusatzstoff und/oder mindestens ein Lösemittel.

Das Lösemittel ist vorzugsweise ein organisches Lösemittel, beispielsweise Ketone, Ester, Alkohole oder Aromaten. Das Lösemittel kann vorzugsweise in Mengen von 1 bis zu 50 Gew.-%, insbesondere 5 bis 75 Gew.-%, jeweils bezogen auf das gesamte Beschichtungsmittel, in dem erfindungsgemäßen aminosilanfreien 1K-Beschichtungsmittel enthalten sein. Die Menge der Lösemittel orientiert sich an der einzustellenden Applikationsviskosität des Beschichtungsmittels.

Das aminosilanfreie 1K-Beschichtungsmittel kann Hilfsstoffe und/oder Zusatzstoffe wie Stabilisatoren, Lichtschutzmittel, Pigmente, Füllstoffe, Verlaufsmittel oder Rheologiehilfsmittel, wie z. B. sog. "sag control agents", Mikrogele oder pyrogenes Siliciumdioxid, aber in typischen Konzentrationen enthalten. Die Hilfsstoffe und/oder Zusatzstoffe können im Falle von pigmentfreien Beschichtungsmitteln, vorzugsweise in Mengen von 0,01 bis zu 90 Gew.- %, insbesondere 0,1 bis 20 Gew.-%, jeweils bezogen auf das gesamte Beschichtungsmittel, in dem erfindungsgemäßen aminosilanfreien Beschichtungsmittel enthalten sein. Im Falle von pigment- und/oder füllstoffhaltigen Beschichtungsmitteln kann der Gehalt von Hilfsstoffen und/oder Zusatzstoffen 0,01 bis 99 Gew.-%, insbesondere 0,1 bis 90 Gew.-%, jeweils bezogen auf das gesamte Beschichtungsmittel, betragen.

Das erfindungsgemäße Beschichtungsmittel kann aber auch Bindemittel-Komponenten enthalten. Dadurch ergibt sich ein zweikomponentiges, aminosilanfreies (2K-)Beschichtungsmittel. Die zwei Komponenten (im vorliegenden Fall gilt die aminosilanfreie Zusammensetzung aus zumindest A) und B) als eine Komponente und das Bindemittel als die andere Komponente) werden getrennt voneinander aufbewahrt und erst bei der Applikation miteinander vermischt da die Bindemittel nur in Ausnahmefällen mit der aminosilanfreien Zusammensetzung aus zumindest den Komponenten A) und B) stabil gelagert werden können.

Gegenstand der Erfindung ist demnach auch ein aminosilanfreies 2K-Beschichtungsmittel, welches mindestens die erfindungsgemäße Zusammensetzung (mindestens enthaltend die oder bestehend aus den Komponenten A) und B) und mindestens eine BindemittelKomponente umfasst. In einer bevorzugten Ausführungsform enthält das aminosilanfreie 2K-Beschichtungsmittel zusätzlich mindestens einen Hilfs- und/oder Zusatzstoff und/oder mindestens ein Lösemittel.

Grundsätzlich eignen sich als Bindemittel-Komponenten alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen verfügen, eingesetzt. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Trialkoxysilan-Funktionalitäten.

Als Bindemittel mit funktionellen Gruppen werden bevorzugt Hydroxylgruppen-haltige Polymere, insbesondere Hydroxylgruppen-haltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 20 bis 150 mg KOH/g und einem mittleren Molekulargewicht von 500 bis 6000 g/mol als Bindemittelkomponenten eingesetzt.

Als hydroxylgruppenhaltige (Meth)acryl-Copolymerisate können Harze mit einer Monomerzusammensetzung, wie sie z. B. in der DE 195 29124 C1 beschrieben sind, verwendet werden. Dabei sollte die durch anteilige Verwendung von (Meth)acrylsäure als Monomer einzustellende Säurezahl des (Meth)acryl-Copolymerisates 0 bis 30, vorzugsweise 3 bis 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 bis 20000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 70 bis 250 mg KOH/g, besonders bevorzugt 90 bis 190 mg KOH/g.

Erfindungsgemäß geeignete Polyesterpolyole sind Harze mit einer Monomerzusammensetzung aus Di- und Polycarbonsäuren und Di- und Polyolen, wie sie in WO 93/15849 A1 beschrieben sind. Als Polyesterpolyole können auch Polyadditionsprodukte von Caprolacton an niedermolekulare Di- und Triole, wie sie z. B. unter der Bezeichnung CAPA^{®} (Perstorp) erhältlich sind, eingesetzt werden. Das rechnerisch bestimmte zahlenmittlere Molgewicht beträgt vorzugsweise 500 bis 5000 g/mol, besonders bevorzugt 800 bis3000 g/mol, die mittlere Funktionalität beträgt vorzugsweise 2,0 bis 4,0, bevorzugt 2,0 bis 3,5.

Als erfindungsgemäß zu verwendende urethan- und estergruppenhaltige Polyole kommen prinzipiell auch solche zum Einsatz, wie sie in EP 0 140 186 A2 beschrieben sind. Bevorzugt werden urethan- und estergruppenhaltige Polyole, zu deren Herstellung HDI, IPDI, Trimethylhexamethylendiisocyanat (TMDI) oder (H₁₂-MDI) verwendet werden, eingesetzt. Das zahlenmittlere Molgewicht beträgt vorzugsweise 500 bis 2000 g/mol, die mittlere Funktionalität liegt insbesondere im Bereich von 2,0 bis 3,5.

Selbstverständlich können auch Mischungen der vorab beschriebenen Bindemittel eingesetzt werden. Bevorzugte Bindemittel sind Hydroxylgruppen-haltige Polyester und Polyacrylate, allein oder in Mischungen.

Der Anteil etwaiger zusätzlicher Bindemittel in dem erfindungsgemäßen aminosilanfreien 2K-Beschichtungsmittel kann insbesondere 5 bis 60 Gew.-%, insbesondere 10 bis 40 Gew.-%, bezogen auf das gesamte Beschichtungsmittel, betragen.

Das erfindungsgemäße aminosilanfreie 2K-Beschichtungsmittel kann zusätzlich in der Lacktechnologie bekannte Hilfsstoffe und/oder Zusatzstoffe wie Stabilisatoren, Lichtschutzmittel, Pigmente, Füllstoffe, Verlaufsmittel oder Rheologiehilfsmittel, wie z. B. sog. "sag control agents", Mikrogele oder pyrogenes Siliciumdioxid, in typischen Konzentrationen enthalten. Falls erforderlich, können in dem erfindungsgemäßen aminosilanfreien Beschichtungsmittel auch in der Lacktechnologie übliche anorganische oder organische Farb- und/oder Effektpigmente eingearbeitet werden.

Die Hilfsstoffe und/oder Zusatzstoffe können im Falle von pigmentfreien, aminosilanfreien Beschichtungsmitteln, vorzugsweise in Mengen von 0,01 bis zu 90 Gew.-%, insbesondere 0,1 bis 20 Gew.-%, jeweils bezogen auf das gesamte Beschichtungsmittel, in dem erfindungsgemäßen aminosilanfreien Beschichtungsmittel enthalten sein. Im Falle von pigment- und/oder füllstoffhaltigen aminosilanfreien Beschichtungsmitteln kann der Gehalt von Hilfsstoffen und/oder Zusatzstoffen 0,01 bis 99 Gew.-%, insbesondere 0,1 bis 90 Gew.- %, jeweils bezogen auf das gesamte Beschichtungsmittel, betragen.

Das optional vorhandene Lösemittel für das aminosilanfreie 2K-Beschichtungsmittel ist vorzugsweise ein organisches Lösemittel, beispielsweise. B. Ketone, Ester, Alkohole oder Aromaten. Das Lösemittel kann vorzugsweise in Mengen von 1 bis zu 50 Gew.-%, insbesondere 5 bis 75 Gew.-%, jeweils bezogen auf das gesamte Beschichtungsmittel, in dem erfindungsgemäßen Beschichtungsmittel enthalten sein. Die Menge der Lösemittel orientiert sich an der einzustellenden Applikationsviskosität des Beschichtungsmittels.

Die Summe der Anteile aller Komponenten der aminosilanfreien Zusammensetzung oder des aminosilanfreien Beschichtungsmittels, also zumindest der Komponenten A) und B), sowie der zusätzlich möglichen Bindemittel, Hilfs- und/oder Zusatzstoffe und Lösemittel ergibt immer 100 Gew.-%.

Die Herstellung der erfindungsgemäßen aminosilanfreien Zusammensetzung bzw. des erfindungsgemäßen aminosilanfreien Beschichtungsmittels erfolgt durch Mischung der vorab beschriebenen Komponenten. Das Mischen kann in dem Fachmann bekannten Mischern erfolgen, beispielsweise Rührbehältern, Dissolvern, Perlmühlen, Walzenstühlen, etc., aber auch kontinuierlich mittels Statikmischern.

Ein weiterer Gegenstand der Erfindung ist die Verwendung von aminosilanfreien 1K- oder 2K-Beschichtungsmitteln, die mindestens die erfindungsgemäße aminosilanfreie Zusammensetzung enthalten, wobei die Beschichtungsmittel insbesondere bei Temperaturen von 0 °C bis 170 °C härtbar sind, zur Beschichtung von Holz, Kunststoff, Glas oder Metall geeignet sind.

Die auf Basis der vorab genannten Beschichtungsmittel erhaltenen Beschichtungen sind gekennzeichnet durch eine hohe Beständigkeit gegenüber mechanischer Beanspruchung. Darüber hinaus zeigen sie eine sehr gute Beständigkeit gegenüber Chemikalien, eine außergewöhnlich gute Witterungsbeständigkeit und eine sehr gute Balance zwischen Härte und Flexibilität.

Beschichtungen enthaltend die erfindungsgemäßen Beschichtungsmittel sind ebenfalls Gegenstand der vorliegenden Erfindung.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

Nachfolgend wird die vorliegende Erfindung anhand von Beispielen näher erläutert. Alternative Ausführungsformen der vorliegenden Erfindung sind in analoger Weise erhältlich.

### Beispiele:

### Beispiel 1): Herstellung von Beschichtungsmitteln (1K)

Die einzelnen Stoffe werden, je nach Rezeptur, nacheinander in eine Glasflasche gegeben und verrührt bis sich eine homogene gut durchmischte Lösung bildet. Die verwendeten Alkylammoniumhalogenide TMAF und TBAF wurden vor der Zugabe zur Zusammensetzung 10%ig in Ethanol gelöst (Außer in Beispiel 2 / Zusammensetzung N). Allen Beschichtungsmittel wurde ein Verlaufsmittel (Tego Glide 410 / 10%ig in n-Butylacetat) hinzugefügt.

### Herstellung der Beschichtungen:

Die wie vorher beschrieben hergestellten Zusammensetzungen werden mittels eines Rakels mit einer Nassschichtdicke von etwa 120 µm auf Prüfbleche (Chemetall Group / Gardobond 26S 60 OC) aufgetragen. Eine Übersicht über die hergestellten Zusammensetzungen findet sich in Tabelle 1. Alle Mengen sind in Gewichtsprozent angegeben.

Nach dem Auftrag werden die Prüfbleche mit der Beschichtung in einem klimatisierten Raum bei 23°C und einer relativen Luftfeuchte von 50% gelagert. Nach einem Tag wird die Pendelhärte (nach König) an den hergestellten Beschichtungen bestimmt. Zusätzlich dazu wird direkt nach Applikation der Beschichtung die Staubtrockenzeit erfasst.

Die Grundlage der Pendelhärte ist, dass die Schwingungsamplitude eines sich aufstützenden Pendels umso schneller abnimmt, je stärker der Untergrund dämpft und die Schwingungsenergie absorbiert wird. Die Probenplatte (mit Beschichtung) wird auf dem Hubteller platziert. Mit dem von außen bedienbarem Hebelarm wird der Hubteller anschließend an das Pendel gefahren. Dieses wird bis zur Skalenposition 6° ausgelenkt und dem Drahtauslöser fixiert und anschließend gelöst. Ermittelt wird die Anzahl der Schwingungen, die das Pendel zum Abklingen von 6° auf 3° zur Senkrechten benötigt. Durch Multiplikation der Schwingungen mit dem Faktor 1,4 wird die Pendeldämpfung nach König in Sekunden errechnet. Die Messung wird innerhalb der Probe an 2 verschiedenen Stellen durchgeführt und der Mittelwert errechnet.

Die Bestimmung der Trocknungszeit des Beschichtungsstoffs erfolgt durch Bestimmung der Staubtrockenzeit angelehnt an EN ISO 9177 (3:2010).

Hierzu wird das Beschichtungssubstrat mit dem zu prüfenden Lack in der Zielschichtdicke beschichtet. Der Zeitpunkt wird notiert. Im Abstand von 10min. werden ca. 0,3 bis 0,5 g schwere Glasperlen (Glasperlen Ø: 250-500 µm / Hersteller: Carl-Roth GmbH + Co. KG) mit einem kleinen Löffel/Spatel aus 0,5cm Höhe auf einen Punkt vorsichtig auf die Beschichtung gestreut (Durchmesser des Glasperlenhaufens ca. 1,5 bis 2,0 cm). Für jede 10 min wird ein neuer glasperlenfreier Punkt mit Glasperlen beaufschlagt. Bei schnellen Systemen wird die Zeitspanne auf 5 min verringert, bei langsamen beträgt sie anfänglich 15 bis 30 min. erhöht. Gegen Ende der Härtungsdauer werden die Zeitabstände dann aber wieder auf 10 min. verkürzt. Für jeden Punkt wird die Zeitspanne seit dem Auftragen der Beschichtung notiert. Wirkt der Lack optisch getrocknet, werden die Glasperlen mittels eines weichen Haarpinsels vom Blech gewischt und die Zeit festgehalten, zum Zeitpunkt an dem keine Glasperlen auf der Lackoberfläche haften. Sofern Glasperlen an der Lackoberfläche haften, wird der Test fortgeführt.

Die erhaltenen Ergebnisse für die hergestellten Beschichtungen sind in Tabelle 2 dargestellt.

**Tabelle 1: Übersicht über die hergestellten Zusammensetzungen von Beispiel 1)**

| | A* | B* | C* | D* | E* | F* | G* | H* | I | J |
|---|---|---|---|---|---|---|---|---|---|---|
| VESTANAT EP-M 60 (1) | 89,41 | | | 98,50 | 98,50 | 98,50 | 98,50 | 98,50 | 99,00 | |
| VESTANAT EP-E 95 (2) | | 89,41 | 78,50 | | | | | | | 94,50 |
| Dynasylan AMMO (3) | 10,00 | 10,00 | 20,00 | | | | | | | |
| TIB Kat 218 (4) | 0,09 | 0,09 | 1,0 | | | | | | | |
| Tego Glide 410 (5) | 0,05 | 0,05 | 0,05 | 0,05 | 0,05 | 0,05 | 0,05 | 0,05 | 0,05 | 0,05 |
| Hordaphos MOB (6) | | | | 1,00 | | | | | | |
| Hordaphos MDB (7) | | | | | 1,00 | | | | | |
| Polycat 102 (8) | | | | | | 1,00 | | | | |
| TMG (9) | | | | | | | 1,00 | | | |
| K-KAT XK-678 (10) | | | | | | | | 1,00 | | |
| TMAF (11) | | | | | | | | | 0,05 | |
| TBAF*3H₂O (12) | | | | | | | | | | 0,50 |
| Ethanol | | | | | | | | | 0,45 | 4,50 |
| n-Butylacetat | 0,45 | 0,45 | 0,45 | 0,45 | 0,45 | 0,45 | 0,45 | 0,45 | 0,45 | 0,45 |

| | | | | | | | | | | |
|---|---|---|---|---|---|---|---|---|---|---|
| Die mit * gekennzeichneten Zusammensetzungen sind Vergleichsbeispiele (1) VESTANAT EP-M 60, Addukt aus 3-Isocyanatopropyltrimethoxysilan und 1,6-Hexandiol (Verhältnis 3-Isocyanatopropyltrimethoxysilan zu 1,6-Hexandiol entspricht 2:1) (2) VESTANAT EP-E 95, Addukt aus 3-Isocyanatopropyltriethoxysilan und 1,9-Nonandiol (Verhältnis 3-Isocyanatopropyltriethoxysilan zu 1,9-Nonandiol entspricht 2:1) (3) Dynasylan AMMO, 3-Aminopropyltrimethoxysilan der Evonik Resource Efficiency GmbH (4) TIB Kat 218, Dibutyltzinndilaurate, TIB Chemicals AG (5) Tego Glide 410, Polyether Siloxan Copolymer, Evonik Resource Efficiency GmbH (6) Hordaphos MOB, Phosphorsäurebutylester, Clariant (7) Hordaphos MDB, Phosphorsäurebutylester, Clariant (8) Polycat DBU, Diazabicycloundecen, Evonik Resource Efficiency GmbH (9) Tetramethylguanidin, Merck Millipore (10) K-KAT XK-678, Alkyl Säure Phosphat, King Industries (11) Tetramethylammoniumfluorid, Sigma Aldrich (12) Tetrabutylammoniumfluorid Trihydrat, Sigma Aldrich | | | | | | | | | | |

**Tabelle 2: Ergebnisse für die Bestimmung von Pendelhärte und Staubtrockenzeit**

| Zeitraum vor der Messung | Mittelwert Pendelhärte | | | | | | | | | |
|---|---|---|---|---|---|---|---|---|---|---|
| | A* | B* | C* | D* | E* | F* | G* | H* | I | J |
| 1 Tag | 97 | Flüssig | 48 | 109 | 102 | 120 | 116 | 109 | 101 | 113 |
| | | | | | | | | | | |

| | Mittelwert Staubtrockenzeit (min.) | | | | | | | | | |
|---|---|---|---|---|---|---|---|---|---|---|
| | A* | B* | C* | D* | E* | F* | G* | H* | I | J |
| | 35 | >210 | >210 | 25 | 40 | 15 | 30 | 25 | 5 | 22 |

Aus Tabelle 2 wird ersichtlich, dass Beschichtungsmittel, die die zinnfreien Katalysatoren enthalten (Proben D* bis J), bei Raumtemperatur vergleichbar schnell oder sogar schneller härten als die Vergleichsbeispiele mit zinnhaltigem Katalysator und Aminosilan (Proben A*, B* und C*). Gleiches gilt auch für die Pendelhärten, die bei den erfindungsgemäßen Beispielen fast ausschließlich höher sind. Alle aufgeführten erfindungsgemäßen Katalysatoren sind somit eine Alternative zu den bekannten Zinnhaltigen Katalysatoren sowie dem Aminosilan.

Überraschenderweise konnte durch die Verwendung von Alkylammoniumhalogeniden (Probe J) zudem sogar eine rasche Härtung von ethoxybasierten Addukten (2) bei Raumtemperatur erreicht werden, was mit den bekannten Zusammensetzungen (Probe B* und C*) nicht möglich gewesen ist.

### Beispiel 2): Herstellung von Beschichtungsmitteln (2K)

Die einzelnen Stoffe werden, je nach Rezeptur, nacheinander in eine Glasflasche gegeben und verrührt bis sich eine homogene gut durchmischte Lösung bildet. Das NCO : OH Verhältnis wurde jeweils auf ein Verhältnis von 1:1 eingestellt. Die Viskosität der Formulierungen beträgt, bestimmt als Auslaufzeit im DIN-4-Becher bei 23 °C, ca. 20 Sekunden. Die verwendeten Alkylammoniumhalogenide TMAF und TBAF wurden vor der Zugabe zur Zusammensetzung in Ethanol gelöst (10%ige Lösung von TMAF und TBAF). Allen Beschichtungsmittel wurde ein Verlaufsmittel (Tego Glide 410 / 10%ig in n-Butylacetat) hinzugefügt.

### Herstellung der Beschichtungen:

Die wie vorher beschrieben hergestellten Zusammensetzungen werden mittels eines Rakels mit einer Nassschichtdicke von etwa 120 µm auf Prüfbleche (Chemetall Group / Gardobond 26S 60 OC) aufgetragen. Eine Übersicht über die hergestellten Zusammensetzungen findet sich in Tabelle 3. Alle Angaben werden in Gewichtsprozent angegeben.

Nach dem Auftrag werden die Prüfbleche mit der Beschichtung für 30 Minuten bei 130°C in einem Umluftofen gehärtet. Nach einem Tag wird die Pendelhärte (nach König) an den hergestellten Beschichtungen bestimmt.

Die erhaltenen Ergebnisse für die hergestellten Beschichtungen sind in Tabelle 4 dargestellt.

**Tabelle 3: Übersicht über die hergestellten Zusammensetzungen von Beispiel 2)**

| | K* | L* | M* | N |
|---|---|---|---|---|
| Setalux 1767 VV-65 (1) | 46,64 | 46,39 | 46,39 | 46,39 |
| VESTANAT HT 2500 L (2) | 17,20 | 17,11 | 17,11 | 17,11 |
| VESTANAT EP-M 60 (3) | 8,24 | 9,11 | 9,11 | 9,11 |
| Tego Glide 410 (4) | 0,05 | 0,05 | 0,05 | 0,05 |
| Butylacetat / Xylol (5) | 26,49 | 26,35 | 26,35 | 26,35 |
| Dynasylan AMMO (6) | 0,92 | | | |
| TIP Kat 218 (7) | 0,01 | | | |
| Hordaphos MOB (8) | | 0,54 | | |
| Polycat 102 (9) | | | 0,54 | |
| TBAF*3H₂O (10) | | | | 0,54 |
| n-Butylacetat | 0,45 | 0,45 | 0,45 | 0,45 |

| | | | | |
|---|---|---|---|---|
| Die mit * gekennzeichneten Zusammensetzung ist ein Vergleichsbeispiel (1) Setalux 1767 VV-65, Polyacrylatpolyol, Nuplex Resins B.V. (2) VESTANAT HT 2500 L, Hexamethylen-1,6-diisocyanat, homopolymer (Isocyanurat Typ), 90%ig in n-Butylacetat / Solvent naphtha (1:1), Evonik Resource Efficiency GmbH (3) VESTANAT EP-M 60, Addukt aus 3-Isocyanatopropyltrimethoxysilan und 1,6-Hexandiol (Verhältnis 3-Isocyanatopropyltrimethoxysilan zu 1,6-Hexandiol entspricht 2:1) (4) Tego Glide 410, Polyether Siloxan Copolymer, Evonik Resource Efficiency GmbH (5) o-Xylol / n-Butylacetat (Mischung 1:1), Merck Millipore (6) Dynasylan AMMO, 3-Aminopropyltrimethoxysilan, Evonik Resource Efficiency GmbH (7) TIP Kat 218, Dibutylzinndilaurate, TIB Chemicals AG (8) Hordaphos MOB, Phosphorsäurebutylester, Clariant (9) Polycat DBU, Diazabicycloundecen, Evonik Resource Efficiency GmbH (10) Tetrabutylammoniumfluorid Trihydrat, Sigma Aldrich | | | | |

**Tabelle 4: Ergebnisse für die Bestimmung der Pendelhärte und Staubtrockenzeit**

| Zeitraum der Messung | Mittelwert Pendelhärte | | | |
|---|---|---|---|---|
| | K* | L* | M* | N |
| 1 Tag | 52 | 128 | 161 | 146 |
| | | | | |

| | Mittelwert Staubtrockenzeit (min.) | | | |
|---|---|---|---|---|
| | K* | L* | M* | N |
| | >210 | 60 | 90 | 30 |

Aus dem Beispiel 2 ist zu erkennen, dass das Vergleichsbeispiel (Probe K*) eine schlechte Kompatibilität zu 2K-PUR-Zusammensetzungen zeigt, die sich in einer nicht ausreichenden Pendelhärte manifestiert.

Werden allerdings die anderen Katalysatorsysteme (Probe L* bis N) verwendet, kann eine ausreichende Härte generiert werden, trotz erhöhten Härtungstemperaturen.

Diese Zusammensetzungen können unter Beibehaltung der vorteilhaften Eigenschaften sowohl bei Raumtemperatur (Beispiel 1) als auch bei erhöhten Temperaturen (Beispiel 2) gehärtet werden.

## Patentansprüche

1. Aminosilanfreie Zusammensetzung, welche mindestens A) ein Addukt aus Isocyanatosilanen an Hydroxy-funktionelle Verbindungen und B) einen zinnfreien Katalysator ausgewählt aus Tetramethylammoniumfluorid, Tetrapropylammoniumfluorid, Tetraethylammoniumfluorid, Tetrabutylammoniumfluorid oder einer Mischung davon umfasst,
wobei die Hydroxy-funktionelle Verbindungen aus Mono-Alkoholen oder Polyolen, wobei der Begriff "Polyole" Diole, Triole, Tetrole und Hydroxylgruppen-haltige Polymere mit einer OH-Zahl von 10 bis 500 mg KOH/Gramm und einer zahlenmittleren Molmasse von 250 bis 6000 g/Mol bestimmt mittels Gelpermeationschromatographie in Tetrahydrofuran als Eluent und Polystyrol zur Kalibrierung umfasst, ausgewählt werden,
wobei die Hydroxylgruppen-haltige Polymere aus der Gruppe, bestehend aus Polyestern, Polyethern, Polyacrylaten, Polycarbonaten, Epoxidharzen, Cellulosederivaten, FEVE (Fluoroethylene Vinyl Ether), Alkyden und Polyurethanen, wobei die Polyurethane aus Polyolen und Diisocyanat-Monomeren bestehen, ausgewählt werden; und
wobei die Menge der Komponente A) 40 bis 99 Gew.-% und die Menge der Komponente B) 0,01 bis 3 Gew.-% beträgt, jeweils bezogen auf die gesamte Zusammensetzung.

2. Aminosilanfreie Zusammensetzung nach Anspruch 1, wobei es sich bei dem Isocyanatosilan um eine Verbindung der Formel (I)
OCN-(Alkyl)-Si(Alkoxy)₃ (I)
handelt, worin das Alkyl in vorstehender Formel (I) einer linearen oder verzweigten Alkylgruppe mit 1 bis 4 Kohlenstoffatomen und das Alkoxy in vorstehender Formel (I) jeweils unabhängig voneinander einer Methoxy-, Ethoxy-, Propoxy- oder Butoxy-Gruppe entspricht, wobei die drei Alkoxygruppen in der Verbindung der Formel (I) jeweils gleich oder unterschiedlich voneinander sein können.

3. Aminosilanfreie Zusammensetzung nach Anspruch 2, wobei das Alkoxy in der Verbindung der Formel (I) jeweils unabhängig voneinander aus Methoxy- und Ethoxygruppen ausgewählt wird.

4. Aminosilanfreie Zusammensetzung nach Anspruch 3, wobei die Alkoxygruppen, in dem Fall, dass alle drei Alkoxygruppen gleich sind, keine Methoxygruppen sind.

5. Aminosilanfreie Zusammensetzung nach einem der Ansprüche 1 bis 4, wobei das Verhältnis von OH-Gruppen aus den Hydroxy-funktionellen Verbindungen zu NCO-Gruppen aus den Isocyanatosilanen von 0,8 : 1 bis 1,2 : 1 beträgt.

6. Aminosilanfreies 1K- oder 2K-Beschichtungsmittel, welches mindestens die aminosilanfreie Zusammensetzung nach einem der Ansprüche 1 bis 5 umfasst.

7. Aminosilanfreies1K- oder 2K-Beschichtungsmittel nach Anspruch 6, welches mindestens einen Hilfs- und/oder Zusatzstoff und/oder mindestens ein Lösemittel enthält.

8. Aminosilanfreies 1K- oder 2K-Beschichtungsmittel nach Anspruch 7, wobei der mindestens eine Hilfs- und/oder Zusatzstoff aus der Gruppe, bestehend aus Stabilisatoren, Lichtschutzmittel, Katalysatoren, Pigmente, Verlaufsmittel oder Rheologiehilfsmittel, wie z. B. sog. "sag control agents", Mikrogele, pyrogenes Siliciumdioxid, anorganische oder organische Farb- und/oder Effektpigmente oder Mischungen von zwei oder mehr davon, ausgewählt wird.

9. Verwendung des aminosilanfreien 1K- oder 2K-Beschichtungsmittels nach einem der Ansprüche 6 bis 8 zur Beschichtung von Holz, Kunststoff, Glas oder Metall.

10. Beschichtung, enthaltend das aminosilanfreie 1K- oder 2K-Beschichtungsmittel nach einem der Ansprüche 6 bis 8.

## Claims

1. Aminosilane-free composition comprising at least A) an adduct of isocyanatosilanes with hydroxy-functional compounds and B) a tin-free catalyst selected from tetramethylammonium fluoride, tetrapropylammonium fluoride, tetraethylammonium fluoride, tetrabutylammonium fluoride or a mixture thereof,
wherein the hydroxy-functional compounds are selected from monoalcohols or polyols, wherein the term "polyols" encompasses diols, triols, tetrols and hydroxyl group-containing polymers having an OH number of 10 to 500 mg KOH/gram and a number-average molar mass of 250 to 6000 g/mol, determined by gel permeation chromatography in tetrahydrofuran as eluent and polystyrene for calibration,
wherein the hydroxyl group-containing polymers are selected from the group consisting of polyesters, polyethers, polyacrylates, polycarbonates, epoxy resins, cellulose derivatives, FEVE (fluoroethylene vinyl ether), alkyds and polyurethanes, wherein the polyurethanes consist of polyols and diisocyanate monomers; and
wherein the amount of component A) is 40 to 99% by weight and the amount of component B) is 0.01 to 3% by weight, based in each case on the total composition.

2. Aminosilane-free composition according to Claim 1, wherein the isocyanatosilane is a compound of the formula (I)
OCN-(alkyl)-Si(alkoxy)₃ (I)
wherein the alkyl in formula (I) above corresponds to a linear or branched alkyl group having 1 to 4 carbon atoms and the alkoxy in formula (I) above in each case corresponds mutually independently to a methoxy, ethoxy, propoxy or butoxy group, wherein the three alkoxy groups in the compound of the formula (I) may in each case be identical or different from one another.

3. Aminosilane-free composition according to Claim 2, wherein the alkoxy in the compound of the formula (I) is in each case mutually independently selected from methoxy and ethoxy groups.

4. Aminosilane-free composition according to Claim 3, wherein the alkoxy groups, in the case that all three alkoxy groups are identical, are not methoxy groups.

5. Aminosilane-free composition according to any of Claims 1 to 4, wherein the ratio of OH groups of the hydroxy-functional compounds to NCO groups of the isocyanatosilanes is from 0.8:1 to 1.2:1.

6. Aminosilane-free 1K or 2K coating composition comprising at least the aminosilane-free composition according to any of Claims 1 to 5.

7. Aminosilane-free 1K or 2K coating composition according to Claim 6 which comprises at least one auxiliary and/or additive and/or at least one solvent.

8. Aminosilane-free 1K or 2K coating composition according to Claim 7, wherein the at least one auxiliary and/or additive is selected from the group consisting of stabilizers, light stabilizers, catalysts, pigments, levelling agents or rheological assistants, such as so-called "sag control agents", microgels, fumed silicon dioxide, inorganic or organic colour pigments and/or effect pigments or mixtures of two or more thereof.

9. Use of the aminosilane-free 1K or 2K coating composition according to any of Claims 6 to 8 for coating wood, plastic, glass or metal.

10. Coating comprising the aminosilane-free 1K or 2K coating composition according to any of Claims 6 to 8.

## Revendications

1. Composition exempte d'aminosilane, qui contient au moins A) un produit d'addition d'isocyanatosilanes sur des composés à fonctionnalité hydroxy et B) un catalyseur exempt d'étain choisi parmi le fluorure de tétraméthylammonium, le fluorure de tétrapropylammonium, le fluorure de tétraéthylammonium, le fluorure de tétrabutylammonium ou un mélange de ceux-ci,
les composés à fonctionnalité hydroxy étant choisis parmi les monoalcools et les polyols, le concept "polyols" comprenant les diols, les triols, les tétraols et les polymères contenant des groupes hydroxyle présentant un indice d'OH de 10 à 500 mg de KOH/gramme et présentant une masse molaire moyenne en nombre de 250 à 6000 g/mole, déterminée par chromatographie par perméation de gel dans du tétrahydrofuranne comme éluant et du polystyrène pour la calibration,
les polymères contenant des groupes hydroxyle étant choisis dans le groupe constitué par les polyesters, les polyéthers, les polyacrylates, les polycarbonates, les résines époxyde, les dérivés de cellulose, le FEVE (fluoroéthylène-vinyl-éther), les alkydes et les polyuréthanes, les polyuréthanes étant constitués par des polyols et des monomères de diisocyanate ;
la quantité du composant A) représentant 40 à 99% en poids et la quantité du composant B) représentant 0,01 à 3% en poids, par rapport à la composition totale.

2. Composition exempte d'aminosilane selon la revendication 1, l'isocyanatosilane étant un composé de formule (I)
OCN-(alkyl)-Si(alcoxy)₃ (I)
alkyl dans la formule (I) ci-dessus correspondant à un groupe alkyle linéaire ou ramifié comprenant 1 à 4 atomes de carbone et alcoxy dans la formule (I) ci-dessus correspondant, à chaque fois indépendamment les uns des autres, à un groupe méthoxy, éthoxy, propoxy ou butoxy, les trois groupes alcoxy dans le composé de formule (I) pouvant à chaque fois être identiques ou différents les uns des autres.

3. Composition exempte d'aminosilane selon la revendication 2, les groupes alcoxy dans le composé de formule (I) étant choisis, à chaque fois indépendamment les uns des autres, parmi les groupes méthoxy et éthoxy.

4. Composition exempte d'aminosilane selon la revendication 3, les groupes alcoxy, dans le cas où les trois groupes alcoxy sont identiques, n'étant pas des groupes méthoxy.

5. Composition exempte d'aminosilane selon l'une quelconque des revendications 1 à 4, le rapport des groupes OH des composés à fonctionnalité hydroxy aux groupes NCO des isocyanatosilanes valant 0,8:1 à 1,2:1.

6. Agent de revêtement à 1 ou 2 composants, exempt d'aminosilane, qui comprend au moins la composition exempte d'aminosilane selon l'une quelconque des revendications 1 à 5.

7. Agent de revêtement à 1 ou 2 composants, exempt d'aminosilane, selon la revendication 6, qui contient au moins un adjuvant et/ou additif et/ou au moins un solvant.

8. Agent de revêtement à 1 ou 2 composants, exempt d'aminosilane, selon la revendication 7, ledit au moins un adjuvant et/ou additif étant choisi dans le groupe constitué par les stabilisants, les agents de protection contre la lumière, les catalyseurs, les pigments, les agents d'étalement ou les adjuvants de rhéologie, comme par exemple ce qu'on appelle des "sag control agents" (agents anticoulures), les microgels, le dioxyde de silicium pyrogène, les pigments inorganiques ou organiques colorants et/ou conférant un effet ou les mélanges de deux ou plus de ceux-ci.

9. Utilisation de l'agent de revêtement à 1 ou 2 composants, exempt d'aminosilane, selon l'une quelconque des revendications 6 à 8 pour le revêtement de bois, de matériau synthétique, de verre ou de métal.

10. Revêtement, contenant l'agent de revêtement à 1 ou 2 composants, exempt d'aminosilane, selon l'une quelconque des revendications 6 à 8.
